# EUROPEAN PATENT SPECIFICATION

(11) **EP 3 406 917 B1**
(45) Date of publication and mention of the grant of the patent: **19.05.2021**
(21) Application number: 18164536.7
(22) Date of filing: 28.03.2018
(51) Int. Cl.: F16B 12/20, F16B 12/14

(54) **EXPANSION BOLT KIT AND METHOD FOR USING THE SAME**
SPREIZDÜBEL UND VERFAHREN ZU SEINER VERWENDUNG
CHEVILLE À EXPANSION ET SON PROCÉDÉ D'UTILISATION

(30) Priority: 25.05.2017 CN 201710383041
(43) Date of publication of application: 28.11.2018
(73) Proprietor: Liu, Weiming, 510800 Guangzhou, Guangdong (CN)
(72) Inventor: Liu, Weiming, 510800 Guangzhou, Guangdong (CN)
(74) Representative: Lang, Christian

(56) References cited:
- EP-A1- 0 150 605
- DE-U1- 29 804 267
- GB-A- 1 309 391

## Description

The disclosure relates to the field of bolt kits, and more particularly to an expansion bolt kit and a method for using the same.

Three-in-one connectors, also known as fasteners or combiners, typically include an eccentric fitting, a link rod, and an embedded nut. These connectors are mainly used in board furniture, specifically for perpendicular connection between boards or interconnection among three boards to achieve horizontal connection between two boards. Theses connectors are typically used for Medium Density Boards, High Density Boards, and Particle Boards. Specifically, the arc by which the torque corner at the bottom of an eccentric fitting is deviated from the circle center is utilized. When a cross-slot of the eccentric fitting is turned by a screw tap, the link rod gripped in the arc is pulled toward the center of the eccentric fitting along the arc so as to reduce the distance between the eccentric fitting and the embedded nut to enable secure connection between boards.

With regard to conventional three-in-one connectors, the boards are connected by embedding a plastic nut in advance, screwing a bolt into the nut, and locking the nut with an eccentric fitting based on the principle of cam. With conventional two-in-one quick-assemble connectors, the boards are connected by rotating an eccentric fitting to lift the bolt for expansion and locking. By lifting the bolt, the expansion sleeve becomes expanded and the bolt is raised above the fixation plane. Currently, expansion bolt kits available in the market comprise a bolt and an expansion sleeve. One end of the bolt has an expansion portion that spread the expansion sleeve, such that the expansion bolt enters an expanded state with respect to the wall and the board body. Chinese Patent Application No. 2016104925744, entitled Puller Expansion Bolt, disclosed a puller expansion bolt which still has the following drawbacks. 1. It requires a large amount of material and complicated installation. 2. It is difficult to squeeze the hemispherical head in between the expansion pieces, leading to an unreliable structure. 3. To install such an expansion bolt, the sleeve needs to be inserted at first, then the bolt is screwed into the sleeve. It is difficult to remove and replace the sleeve. Particularly, it is difficult to remove the embedded part or the inserted sleeve, or otherwise another hole needs to be drilled to embed the part, making it impossible to reuse the kit. In addition, GB 1 309 391 A recites an expansion bolt assembly including a bolt and a cylindrical sleeve for receiving the bolt. The cylindrical sleeve includes two identical semi-cylindrical segments that are connected end to end by an integral strap hinge and that are folded over into a confronting configuration. The two semi-cylindrical segments are engaged with each other via a wire clip or a rubber band, or via studs and holes that are disposed on the longitudinal edges of the segments. There are longitudinal gaps disposed between the two semi-cylindrical segments. The bolt includes a bolt head and a shank, and the shank includes a threaded end and a rod that is connected to the bolt head and has a smooth outer surface. The shank of the bolt is received in the sleeve, and shell is expanded by turning the bolt.

In view of the problems mentioned above, it is an objective of the disclosure to provide an expansion bolt kit that allows for fixing or removing the sleeve along with the bolt and that has a simple structure and low cost, is easy to assemble and disassemble, and the connection thereof is secure and reliable.

The objective is achieved by the following technical solutions summarized as follows.

An expansion bolt kit comprises a bolt and an expansion sleeve in which the bolt is sleeved, one end of the expansion sleeve comprising an expansion portion, the expansion portion comprising a plurality of longitudinal cutouts distributed evenly around the expansion portion and adapting to divide the expansion portion into expansion pieces capable of being expanded outwardly; the bolt comprising a rod and a bolt head, the rod comprising a bare rod portion near the bolt head at one end and a threaded portion at the other end, the bare rod portion comprising a smooth outer wall, the threaded portion comprising an outer wall provided with an external thread; the expansion sleeve comprising two half tubes that can be mated exactly to each other, each of the half tubes comprising an upper portion and a lower portion, and the half tubes being engaged into one tube via a snap-fit structure. A circular grip hole is provided at the middle portion of the inner wall of the expansion sleeve. The inner diameter of the circular grip hole matches the outer diameter of the bare rod portion. The inner diameter of the circular grip hole is slightly larger than or equal to the outer diameter of the bare rod portion and smaller than the outer diameter of the threaded portion. The outer diameter of the threaded portion is larger than that of the bare rod portion. One side of the circular grip hole is provided with an intemal thread that matches the threaded portion. When the expansion bolt kit is assembled, the threaded portion of the bolt is located at the side of the circular grip hole comprising the internal thread. The internal thread extends from the middle portion to the end or close to the end of the expansion sleeve.

In a class of an embodiment, the half tubes of the expansion sleeve have the same structure. The snap-fit structure is provided at both side edges of the half tubes. The snap-fit structure comprises a snap-fit fastener that comprises an insertion hole and a matching cog. Two pairs of snap-fit fasteners are disposed at an end of the expansion sleeve. The insertion hole and the matching cog are disposed in correspondence at the two edge sides of each half tube respectively. The matching cog is provided with a rib. The rib is embedded and gripped in the insertion hole following an insertion of the matching cog into the insertion hole. The matching cog at the upper portion of the half tube can be embedded into the insertion hole at the lower portion of the half tube, and the matching cog at the lower portion of the half tube can be embedded into the insertion hole at the upper portion of the half tube. Insertion of the matching cog in the insertion hole causes the two half tubes of the expansion sleeve to be engaged into one tube.

In a class of an embodiment, the two half tubes are hinged to each other at one side via a connection rib and comprise a snap-fit structure at the other side. The snap-fit fastener comprises an insertion hole and a matching cog. There is one pair of snap-fit fasteners. The insertion hole and the matching cog are disposed at the two side edges of the upper and lower portions at the side opposite to the connection rib respectively. The snap-fit fastener is disposed at one end of the expansion sleeve. The matching cog is provided with a rib. The rib is embedded and gripped in the insertion hole following an insertion of the matching cog in the insertion hole. The matching cog at the upper or lower portion of the half tube can be inserted in the insertion hole at the lower or upper portion of the half tube. Insertion of the matching cog in the insertion hole causes the two half tubes of the expansion sleeve to be engaged into one tube.

In a class of an embodiment, a conical hole is provided at the end of the expansion sleeve and is coaxial therewith along the central line. The hole diameter of the conical hole tapers along the direction in which the bolt is screwed into the expansion sleeve. Longitudinal cutouts are distributed evenly around the conical hole. The internal thread extends from the middle portion of the expansion sleeve onto the wall of the conical hole, and matches the external thread of the threaded portion.

In a class of an embodiment, a through hole is provided at the end of the expansion sleeve and is coaxial therewith along the central line. The through hole is positioned at the end of the conical hole. The diameter of the through hole is smaller than the diameter at the end of the conical hole. A circular hole is provided at the front end of the expansion sleeve and is coaxial therewith along the central line. The inner diameter of the circular hole matches the outer diameter of the bare rod portion. The inner diameter of the circular hole is slightly larger than or equal to the outer diameter of the bare rod portion. The snap-fit fastener is positioned between the circular grip hole and the circular hole.

In a class of an embodiment, two to four longitudinal cutouts are disposed. The length of the longitudinal cutouts is equal to that of the expansion portion. An external thread is evenly distributed over the outer wall of the expansion portion of the expansion sleeve. A locating ring is provided at the front end of the expansion portion around the outer surface of the expansion sleeve. The expansion portion is located at one side of the locating ring. The outer diameter of the locating ring is larger than that of the expansion portion. The locating ring provides locating during installation.

In a class of an embodiment, the diameter of the bare rod portion is smaller than that of the threaded portion. The bolt head is provided with various types of slots, such as a cross/single slot, a cross slot, a single slot, and a torx slot. Anti-slip dots are provided evenly around the inner side of the bolt head. An annular locating washer is arranged around the bare rod portion. The locating washer, the threaded portion, and the bare rod portion are longitudinally coaxial at the center. The outer diameter of the locating washer is larger than the inner diameter of the circular hole. The length from the locating washer to the end of the bolt portion is smaller than the length of the expansion sleeve. The bolt is screwed into the expansion portion to make it expand. The locating washer prevents the bolt from being screwed excessively beyond the expansion portion.

In a class of an embodiment, a link or connection rib is provided at two adjacent side edges of the upper and lower portions to connect the upper and lower portions into an integral structure. The outer diameter of the expansion portion at one side of the locating ring is larger than that of the portion of the expansion sleeve at the other side of the locating ring. Stiffening ribs are provided longitudinally over the wall of the expansion sleeve at the other side of the locating ring and are distributed evenly around the wall. The expansion bolt kit further comprises a bushing of a cylindrical shape disposed over its outer surface. The bushing wraps tightly around the portion of the expansion sleeve at the other side of the locating ring.

A method for installing the expansion bolt kit comprises the following steps: providing a first board and drilling a first hole in the first board; directly inserting the expansion portion of the expansion bolt knit into the first hole; turning the bolt manually or using a bolt driver, when the bolt is screwed into the expansion sleeve, the bolt squeezes the longitudinal cutouts of the expansion portion to spread, such that the expansion sleeve is expanded radially to fix and lock the expansion bolt kit; drilling a second hole in a second board and installing an eccentric fitting in the second hole; and drilling a third hole in the second board, inserting the rod through the third hole of the second board to connect to the eccentric fitting; then tightening the eccentric fitting, to achieve seamless locking and fixing of the first and second boards.

The expansion bolt kit allows for fixing or removing the sleeve along with the bolt, has a simple structure and low cost, is easy to assemble and disassemble, and the connection thereof is secure and reliable. Specifically, advantages of the expansion bolt knit provided by the disclosure are summarized as follows:
1. This expansion bolt kit has a simple structure, in which the integrally formed expansion sleeve requires a simple manufacture process and a small amount of material, has a low cost, and features convenient use and good durability. Due to the configuration of the expansion sleeve comprising half tubes with upper and lower portions and the arrangement of a snap-fit structure, the expansion sleeve can be opened and closed to facilitate removal of the bolt. This snap-fit structure is very simple and convenient to operate. A circular grip hole is provided in the expansion sleeve and has an inner diameter that is equal to the outer diameter of the bare rod portion and smaller than the outer diameter of the threaded portion. Due to such a "large head and small rod" configuration of the bolt and the arrangement of the circular grip hole, the bolt can be removed along with the expansion sleeve simply by being screwed outwardly and pulled out. This facilitates installation, removal, and reuse of the bolt kit. If the bolt is damaged, it can be replaced by a common bolt, thereby increasing utilization of the bolt knit considerably. Moreover, such a "large head and small rod" configuration requires less material and has a lower cost.
2. The internal thread of the expansion sleeve matches the external thread of the threaded portion. Arrangement of the external thread on the periphery of the expansion sleeve and arrangement of the conical hole allow for convenient and effortless installation. The bolt is screwed into the threaded portion to cause the expansion portion to be expanded, such that the expansion portion is gripped tightly in the drilled hole. The internal and external threads on the expansion sleeve improve the stability of the connector considerably, resulting in more secure and reliable connection.
3. The locating ring provides both blocking and stopping. It blocks the inserted expansion sleeve and prevents the bolt kit from being inserted deeper, thereby facilitating installation.
4. The locating washer ensures a proper amount of screwing of the bolt and prevents the bolt from being screwed excessively. The anti-skip dots enable a user without any tool to install the bolt kit bare-handedly without slippage.
5. The bushing facilitates connection between components in the expansion bolt kit, and particularly between the two half tubes of the expansion sleeve that are locked and engaged into one tube via a snap-fit structure such as a connection rib and a snap-fit fastener, thereby making the snap-fitting more stable.
6. The stiffening ribs improve the strength and rigidity of the expansion sleeve without increasing the thickness of the wall of the expansion sleeve. This leads to material saving, reduced weight, and lower cost.
7. The disclosure further discloses a method for using an expansion bolt kit that is simple and convenient which does not require any part to be embedded in advance. After a hole is drilled, the expansion bolt kit is inserted directly into the hole. The bolt is screwed and pushed into the conical hole and causes the longitudinal cutouts on the expansion portion to spread, and therefore fixing is completed. The expansion bolt kit can be removed by loosening the bolt until the threaded portion is retreated to the circular grip hole and pulling out the entire expansion bolt kit. Therefore, the bolt kit can be removed and replaced conveniently.

FIG. 1 is a schematic structural view of an expansion bolt kit according to embodiment 1 of the disclosure;
FIG. 2 is a schematic structural view of an expansion bolt kit according to embodiment 2 of the disclosure;
FIG. 3 is a schematic view of upper and lower portions of an expansion sleeve according to embodiment 2 of the disclosure in an opened state;
FIG. 4 is a schematic structural view of a snap-fit structure for an expansion sleeve according to the disclosure;
FIG. 5 is a schematic structural view of a locating ring according to the disclosure;
FIG. 6 is a structural view of the bolt and expansion sleeve according to the disclosure in a disassembled state;
FIG. 7 is a schematic structural view of a bushing according to the disclosure;
FIG. 8 is a schematic structural view of an expansion bolt kit according to embodiment 3 of the disclosure;
FIG. 9 is a first schematic view showing installation of an expansion bolt kit according to an embodiment of the disclosure; and
FIG. 10 is a second schematic view showing installation of an expansion bolt kit according to an embodiment of the disclosure.

In the drawings, the following reference numbers are used:
1 bolt, 2 expansion sleeve, 3 locating washer, 4 raised insert, 5 slot interface, 6 cog, 7 insertion hole, 8 connection rib, 9 locating ring, 10 bushing, 11 bolt head, 12 cross/single slot, 13 anti-slip dots, 14 external thread of the threaded portion, 21 longitudinal cutouts, 22 internal thread of the expansion sleeve, 23 external thread of the expansion sleeve, 24 expansion portion, 25 threaded portion, 26 bare rod portion, 31 circular hole, 32 circular grip hole, 33 through hole, 34 stiffening ribs, 35 conical hole, 41 side board, 42 layer board, 43 bolt driver, 44 eccentric fitting.

To further illustrate the invention, experiments detailing an expansion bolt kit are described below.

### Example 1

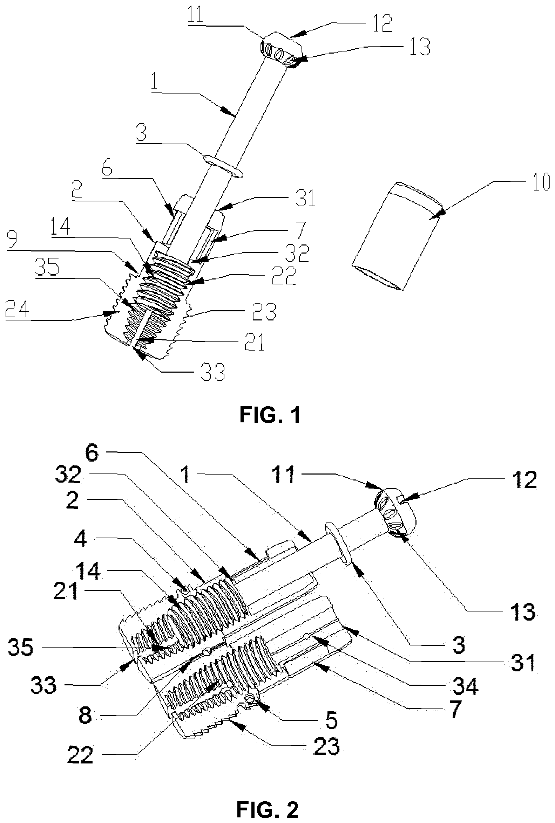

As shown in FIGS. 1, 4, 6, and 7, an expansion bolt kit comprises a bolt 1 and an expansion sleeve 2 in which the bolt 1 is sleeved. One end of the expansion sleeve comprises an expansion portion 24 that has longitudinal cutouts 21 distributed evenly around the expansion portion. The longitudinal cutouts 21 divide the expansion portion into expansion pieces that can be expanded outwardly. The bolt 1 comprises a rod and a bolt head 11. The rod comprises a bare rod portion 26 near the bolt head at one end and a threaded portion 25 at the other end. The bare rod portion 26 has a smooth outer wall. The threaded portion 25 has an outer wall provided with an external thread 14. The expansion sleeve comprises two half tubes that can be mated exactly to each other. Each half tube comprises an upper portion and a lower portion. The two half tubes are engaged into one tube via a snap-fit structure.

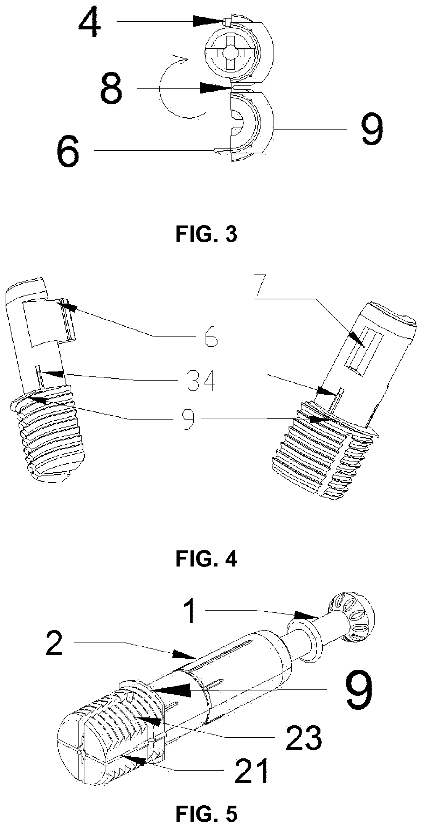

As shown in FIG. 4, the half tubes of the paired expansion sleeve have the same structure. The half tubes are provided with a snap-fit structure at both side edges. The snap-fit structure comprises a snap-fit fastener comprising an insertion hole 7 and a matching cog 6. There are two pairs of snap-fit fasteners disposed at a front end of the expansion sleeve. The insertion holes 7 and the matching cogs 6 are disposed in correspondence at two edge sides of each half tube respectively, and are engaged with each other so as to fasten the two half tubes into one tube. The matching cog 6 is provided with a rib that has a bevel at the front end. To insert the matching cog 6 into the insertion hole 7, the rib is slid into the insertion hole 7 along the bevel. Once the matching cog is inserted and embedded in the insertion hole, the raised portion of the rib is protruded and gripped. The matching cog 6 at an upper portion of the half tube can be embedded in the insertion hole 7 at a lower portion of the half tube, and the matching cog 6 at the lower portion of the half tube can be embedded in the insertion hole 7 at the upper portion of the half tube. Insertion of the matching cog 6 in the insertion hole 7 causes the two half tubes of the expansion sleeve 2 to be engaged into one tube. A slot is provided at a position where the matching cog 6 is adjacent to the side edge of the half tube where the matching cog is located. This slot is a recessed extension of the edge of the tube wall. When the two half tubes are engaged, the slot forms a notch with the edge of the opposite half tube. This notch facilitates unlocking of the snap-fit fastener to separate the half tubes.

The two snap-fit fasteners are located at identical positions and have the same structure, which simplifies the manufacture process. The two snap-fit fasteners may alternatively be disposed at different positions on the expansion sleeve, at the front and rear ends respectively, for example.

A circular grip hole 32 is provided at the middle portion of the inner wall of the expansion sleeve 2. The inner diameter of the circular grip hole 32 matches an outer diameter of the bare rod portion 26. The inner diameter of the circular grip hole 32 is slightly larger than or equal to the outer diameter of the bare rod portion 26, and is smaller than the outer diameter of the threaded portion 25. One side of the circular grip hole 32 is provided with an internal thread 22 that matches the threaded portion 25. When the expansion bolt kit is assembled, the circular grip hole 32 is sleeved over an outer surface of the bare rod portion, the threaded portion 25 of the bolt is positioned at the side of the circular grip hole 32 provided with the internal thread 22, and the internal thread 22 extends from the middle portion to the end or close to the end of the expansion sleeve.

A conical hole 35 is provided at the end of the expansion sleeve and is coaxial therewith along the central line. The hole diameter of the conical hole 35 tapers along the direction in which the bolt 1 is screwed into the expansion sleeve. An internal thread on the wall of the conical hole matches the external thread 14 on the threaded portion. The internal thread 22 is twisted along a direction in which the rod is screwed in. The tapering of the conical hole 35 enables the expansion portion of the expansion sleeve 2 to be expanded outwardly when the bolt 1 is screwed in. Longitudinal cutouts 21 are distributed evenly around the conical hole 35. The internal thread 22 extends from the middle portion of the expansion sleeve onto the wall of the conical hole 35. The intemal thread 22 matches the external thread 14 of the threaded portion 25.

A through hole 33 is provided at the end of the expansion sleeve and is coaxial therewith along the central line. The through hole 33 is positioned at the end of the conical hole 35. The diameter of the through hole 33 is smaller than that of the end of the conical hole 35. The outer diameter at the front end of the expansion sleeve 2 narrows inwardly to be slightly smaller. A circular hole 31 is provided at the front end of the expansion sleeve and is coaxial therewith along the central line. The inner diameter of the circular hole matches the outer diameter of the bare rod portion 26. The inner diameter of the circular hole 31 is slightly larger than or equal to the outer diameter of the bare rod portion 26. When the kit is assembled, the bare rod portion is gripped in the circular hole and the snap-fit fastener is positioned between the circular grip hole 32 and the circular hole 31.

Four longitudinal cutouts 21 are disposed. Two of them are formed by connecting the two half tubes of the expansion sleeve. The other two are cutouts and adapting to divide the expansion portion of the half tubes longitudinally into two equal portions. In this way, the expansion portion is divided into four equal portions. The length of the longitudinal cutouts 21 is equal to that of the expansion portion 24. An external thread 23 is evenly distributed over the outer wall of the expansion portion 24 of the expansion sleeve to provide anti-slipping, such that more secure and reliable connection can be achieved upon expansion and gripping of the expansion portion. As shown in FIG. 5, a locating ring 9 is provided at the front end of the expansion portion 24 on the outer surface of the expansion sleeve. The expansion portion is positioned at one side of the locating ring 9. The locating ring 9 is protruded radially from the half tubes. The outer diameter of the locating ring 9 is larger than that of the expansion portion 24. The locating ring 9 is not protruded at the connection between the upper and lower portions. The locating ring 9 provides locating during installation. The outer diameter of the expansion portion 24 at one side of the locating ring 9 is larger than that of the portion of the expansion sleeve at the other side of the locating ring 9. The wall of the expansion sleeve at the other side of the locating ring is provided longitudinally with stiffening ribs 34 that are distributed evenly around the wall.

The diameter of the bare rod portion 26 is smaller than that of the threaded portion 25. The bolt head 11 may be provided with various types of slots, such as a cross slot, a single slot, and a torx slot. In this embodiment, a cross/single slot 12 is utilized. Anti-slip dots 13 are provided evenly around the inner side of the bolt head 11 to facilitate bare-hand griping and screwing without slippage. An annular locating washer 3 is arranged on the outer surface of the bare rod portion 26 for the purpose of locating, in order to prevent the bolt from being screwed excessively. The locating washer 3, the threaded portion 25, and the bare rod portion 26 are longitudinally coaxial at the center. The outer diameter of the locating washer 3 is larger than the inner diameter of the circular hole, larger than the outer diameter of the bare rod portion 26, and smaller than or equal to the outer diameter of the bolt head 11. The length from the locating washer 3 to the end of the bolt portion is smaller than the length of the expansion sleeve and larger than the length of the expansion sleeve subtracted by the length of the expansion portion 24, i.e., the length of the expansion sleeve before the expansion portion 24. The bolt is screwed into the expansion portion to causes it to be expanded. The locating washer prevents the bolt from being screwed excessively beyond the expansion portion.

The outer diameter of the expansion sleeve before the expansion portion 24 is smaller than that of the expansion portion 24. Stiffening ribs 34 are provided longitudinally along the wall of the expansion sleeve before the expansion portion 24. The stiffening ribs 34 are distributed evenly around the wall to enhance the strength and rigidity of the expansion sleeve without increasing the thickness of the wall of the expansion sleeve. In this way, less material is needed, the weight is reduced, and the cost is lowered.

The expansion sleeve 2 is made of plastic, and the bolt is made of stainless steel.

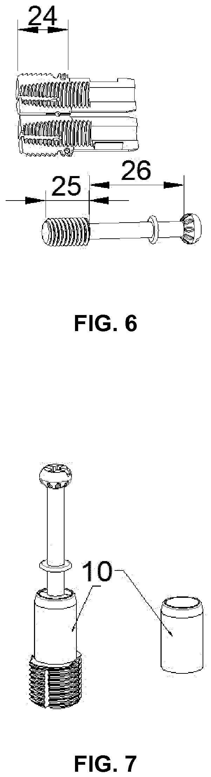

As shown in FIG. 7, a bushing 10 of a cylindrical shape is further sleeved over the expansion sleeve 2. The bushing matches the outer wall of the expansion sleeve 2 before the locating ring 9, and wraps tightly about the portion of the expansion sleeve at one side of the locating ring to further secure the connection between the two half tubes and improve the strength of the expansion sleeve. The bushing may be made of metal, and is preferably made of iron in this embodiment.

### Example 2

As shown in FIGS. 2, 3, and 6, an expansion bolt kit comprises a bolt 1 and an expansion sleeve 2 in which the bolt 1 is sleeved. One end of the expansion sleeve 2 comprises an expansion portion 24 that has longitudinal cutouts 21 distributed evenly around the expansion portion 24. The longitudinal cutouts 21 divide the expansion portion 24 into expansion pieces that can be expanded outwardly. The bolt 1 comprises a rod and a bolt head 11. The rod comprises a bare rod portion 26 near the bolt head 11 at one end and a threaded portion 25 at the other end. The bare rod portion 26 has a smooth outer wall. The threaded portion 25 has an outer wall provided with an external thread 14. The outer diameter of the threaded portion 25 is larger than that of the bare rod portion 26. The expansion sleeve comprises two half tubes that can be mated exactly to each other. The two half tubes are hinged at one side into one tube. Each half tube comprises an upper portion and a lower portion. A snap-fit structure is provided at the other side of the expansion sleeve for locking. As shown in FIG. 3, the half tubes are connected to each other via a connection rib 8. The connected halt tubes can be separated along the connection rib 8. The snap-fit structure is disposed at the side opposite to the hinged side of the half tubes. The snap-fit structure comprises a snap-fit fastener disposed at the front portion of the expansion sleeve. The snap-fit fastener comprises an insertion hole 7 and a cog 6 that are disposed opposite to each other at the side edges of the two half tubes respectively. The matching cog 6 is protruded from the half tube and can be inserted into the insertion hole 7. The matching cog 6 is provided with a rib that has a bevel at the front end. To insert the matching cog 6 into the insertion hole 7, the rib is slid into the insertion hole 7 along the bevel. Once the matching cog 6 is inserted into the insertion hole 7, the rib is embedded in and gripped by the insertion hole 7. Insertion of the matching cog 6 in the insertion hole 7 causes the two half tubes of the expansion sleeves to be engaged into one tube. A slot is provided at a position where the matching cog 6 is adjacent to the side edge of the half tube where the matching cog is located. When the two half tubes are engaged, the slot forms a notch with the edge of the opposite half tube. This notch facilitates unlocking of the snap-fit fastener to separate the half tubes.

The snap-fit structure further comprises a slot interface 5 and a matching raised insert 4 disposed at the other end of the expansion sleeve. The slot interface 5 and the raised insert 4 are disposed at side walls of two side edges of the upper and lower portions of the expansion portion 24 respectively, and the two half tubes of the expansion sleeve 2 are engaged into one tube by inserting the raised insert 4 into the slot interface 5.

A circular grip hole 32 is provided at the middle portion of the inner wall of the expansion sleeve 2. The inner diameter of the circular grip hole 32 is slightly larger than or equal to the outer diameter of the bare rod portion 26 and smaller than the outer diameter of the threaded portion 25. One side of the circular grip hole 32 is provided with an internal thread 22 that matches the threaded portion 25. When the expansion bolt kit is assembled, the circular grip hole 32 is sleeved over the outer surface of the bare rod portion. The threaded portion 25 of the bolt is positioned at the side of the circular grip hole 32 comprising the internal thread 22. The internal thread 22 extends from the middle portion to the end or close to the end of the expansion sleeve.

A conical hole 35 is provided at the end of the expansion sleeve and is coaxial therewith along the central line. The hole diameter of the conical hole 35 tapers along the direction in which the bolt 1 is screwed into the expansion sleeve. The internal thread on the wall of the conical hole matches the external thread 14 on the threaded portion. The internal thread 22 twists along a direction in which the rod is screwed in. The tapering of the conical hole 35 enables the expansion portion of the expansion sleeve 2 to be expanded outwardly when the bolt 1 is screwed in. Longitudinal cutouts 21 are distributed evenly around the conical hole 35. The internal thread 22 extends from the middle portion of the expansion onto the wall of the conical hole 35. The internal thread 22 matches the external thread 14 of the threaded portion 25.

A through hole 33 is provided at the end of the expansion sleeve and is coaxial therewith along the central line. The through hole 33 is located at the end of the conical hole 35. The diameter of the through hole 33 is smaller than the diameter at the end of the conical hole 3. The outer diameter at the front end of the expansion sleeve 2 narrows inwardly to be slightly smaller. A circular hole 31 is provided at the front end of the expansion sleeve and is coaxial therewith along the central line. The inner diameter of the circular hole 31 is slightly larger than or equal to the outer diameter of the bare rod portion 26. When the kit is assembled, the bare rod portion is gripped in the circular hole and the snap-fit fastener is positioned between the circular grip hole 32 and the circular hole 31.

There are four longitudinal cutouts 21 and adapting to divide the expansion portion into four equal portions. The length of the longitudinal cutouts 21 is equal to that of the expansion portion 24. An external thread 23 is evenly distributed over the outer wall of the expansion portion 24 of the expansion sleeve for anti-slipping, such that more secure and reliable connection can be achieved upon expansion and gripping of the expansion portion. As shown in FIG. 5, a locating ring 9 is provided at the front end of the expansion portion 24 on the outer surface of the expansion sleeve. The expansion portion is positioned at one side of the locating ring 9. The locating ring 9 is protruded radially from the half tubes. The outer diameter of the locating ring 9 is larger than that of the expansion portion 24. The locating ring 9 is not protruded at the connection between the upper and lower portions. The locating ring 9 provides locating during assembly. The outer diameter of the expansion portion 24 at one side of the locating ring 9 is larger than that of the portion of the expansion sleeve at the other side of the locating ring 9. The wall of the expansion sleeve at the other side of the locating ring is provided longitudinally with stiffening ribs 34 that are distributed evenly around the wall.

The diameter of the bare rod portion 26 is smaller than that of the threaded portion 25. The bolt head 11 may be provided with various types of slots, such as a cross slot, a single slot, and a torx slot. In this embodiment, a cross/single slot 12 is utilized. Anti-slip dots 13 are provided evenly around the inner side of the bolt head 11 to facilitate bare-hand griping and screwing without slippage. An annular locating washer 3 is arranged on the outer surface of the bare rod portion 26 for locating, in order to prevent the bolt from being screwed excessively. The locating washer 3, the threaded portion 25, and the bare rod portion 26 are longitudinally coaxial at the center. The outer diameter of the locating washer 3 is larger than the inner diameter of the circular hole, larger than the outer diameter of the bare rod portion 26, and smaller than or equal to the outer diameter of the bolt head 11. The length from the locating washer 3 to the end of the bolt portion is smaller than the length of the expansion sleeve and larger than the length of the expansion sleeve subtracted by the length of the expansion portion 24, i.e., the length of the expansion sleeve before the expansion portion 24. The bolt is screwed into the expansion portion to cause it to be expanded. The locating washer prevents the bolt from being screwed excessively beyond the expansion portion.

A link or connection rib 8 is provided at two adjacent side edges of the upper and lower portions to connect the upper and lower portions into an integral structure. The outer diameter of the expansion sleeve before the expansion portion 24 is smaller than that of the expansion portion 34. Stiffening ribs 34 are provided longitudinally over the wall of the expansion sleeve before the expansion portion 24. The stiffening ribs 34 are distributed evenly around the wall to enhance the strength and rigidity of the expansion sleeve without increasing the thickness of the wall of the expansion sleeve. In this way, less material is needed, the weight is reduced, and the cost is lowered.

The expansion sleeve 2 is made of plastic, and the bolt is made of stainless steel.

As shown in FIG. 7, a bushing 10 in a cylindrical shape is further sleeved over the expansion sleeve 2. The bushing matches the outer wall of the expansion sleeve 2 before the locating ring 9, and wraps tightly around the portion of the expansion sleeve at one side of the locating ring to further secure the connection between the two half tubes and enhance the strength of the expansion sleeve.

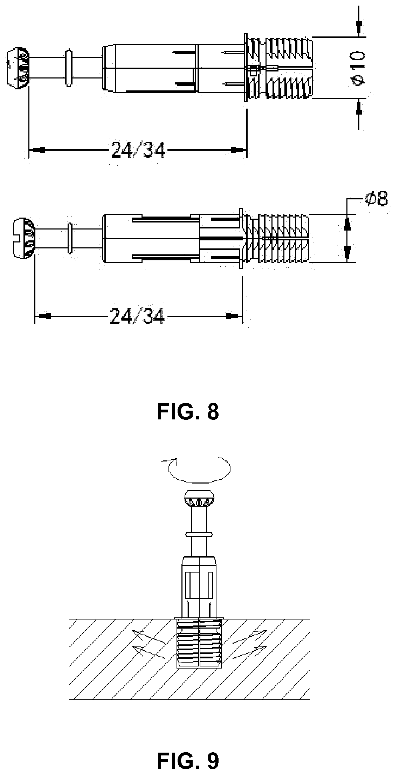

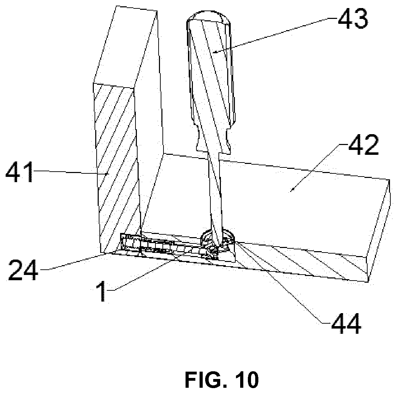

As shown in FIGS. 9 and 10, the expansion bolt kit according to this embodiment is installed in the following manner. After a hole is drilled in a board, the expansion portion 24 of the expansion bolt kit is inserted directly into this hole. Due to the stopping effect of the locating ring 9, the locating ring 9 is stuck on the surface of the board. The bolt 1 is screwed manually or using a bolt driver. When the bolt 1 is pushed through the expansion sleeve 2 along the internal thread 22 in the expansion sleeve, it causes the longitudinal cutouts 21 of the expansion portion 24 to spread, such that the expansion portion 24 of the expansion sleeve is expanded radially. Upon the circumferential expansion of the expansion portion 24, fixing and locking are completed. Then a hole is drilled in another board at a suitable position and an eccentric fitting is installed in the hole. Another hole is drilled at a suitable position to allow the rod to be inserted into the board and connected to the eccentric fitting 44 that has been installed. Then the eccentric fitting 44 is tightened, thereby achieving seamless locking and fixing of the two boards.

With reference to FIG. 10, connection of two boards by means of an eccentric fitting using the method according to this embodiment will be described below in detail.

### 1. Drilling

First, a hole is drilled in a side board 41 and a layer board 42. The diameters of the holes match the outer diameter of the expansion portion of the expansion bolt kit to be inserted and the outer diameter of the eccentric fitting.

### 2. Installation of the expansion bolt kit

a. The expansion rod kit is inserted directly, such that the expansion portion below the locating ring 9 of the expansion bolt kit is embedded entirely in the hole of the board.
b. The rod 1 is screwed using a bolt driver 43 and is expanded into the board. A target locating washer 3 on the rod is turned until it arrives in position.

### 3. Installation of the eccentric fitting 44

An eccentric fitting 44 is installed in the layer board. An arrow mark or"+" and "-" marks are provided on the eccentric fitting. The arrow indicates the direction of the rod. The eccentric fitting 44 must be embedded entirely in the hole of the board.

### 4. Connection of two boards

a. The rod 1 of the side board is aligned to the hole in the layer board, and is inserted in and mated to the hole.
b. The bolt driver 43 is screwed in a direction indicated by the arrow or the "+" mark on the end face of the eccentric fitting 44 to connect and lock the two boards.

To remove the expansion bolt kit, the eccentric fitting 44 is loosened such that the two boards are separated. Then the bolt 1 is loosened, such that the threaded portion 25 is retreated from the conical hole 35. The threaded portion 25 gets stuck because its outer diameter is larger than the inner diameter of the circular grip hole 32. Then the expansion sleeve 2 is pulled out along with the bolt 1, and removal of the expansion bolt kit is completed. If the expansion sleeve 2 or the bolt 1 needs to be replaced, the bushing 10 is pulled out and the snap-fit fastener is unlocked so as to open the snap-fit structure. The two half tubes of the expansion sleeve 2 are opened and the bolt 1 is removed. A new expansion sleeve 2 or bolt 1 is placed in and the bushing 10 is fitted, and replacement is completed.

### Example 3

As shown at the lower part of FIG. 8, this embodiment has a structure similar to embodiment 1 except that the outer diameter of the expansion portion is equal to that of the portion of the expansion sleeve wrapped by the bushing. As the conical hole has an inner diameter that tapers along the direction in which the bolt is screwed, the screwed bolt causes the expansion portion to be expanded and fixed to the board. As the thread on the threaded portion is mated to the internal thread on the expansion sleeve, the bolt kit can be removed by loosening the bolt and pulling out the expansion sleeve along with the rod. Such a simple structure leads to a simple manufacture process, less material use, convenient detachment and installation, and desirable connection and fixing effects.

The expansion bolt kit provided by the disclosure may be extended into products with different hole diameters and lengths based on users' needs and specification requirements. The expansion bolt kit provided by the disclosure is applicable to connection between boards used in furniture, particularly office furniture and home furniture, for example, board furniture such as office desks, file cabinets, tables, dressing lockers, dressing tables, and cupboards. This expansion bolt kit is a furniture connector that facilitates manufacture, shipment, and repeated assembling and disassembling of the furniture.

While particular embodiments of the invention have been shown and described, it will be obvious to those skilled in the art that changes and modifications may be made without departing from the invention in its broader aspects.

## Claims

1. An expansion bolt kit, comprising a bolt (1) and an expansion sleeve (2) in which the bolt (1) is sleeved, one end of the expansion sleeve (2) comprising an expansion portion (24), the expansion portion (24) comprising a plurality of longitudinal cutouts (21) distributed evenly around the expansion portion (24) and adapting to divide the expansion portion (24) into expansion pieces capable of being expanded outwardly; the bolt (1) comprising a rod and a bolt head (11), the rod comprising a bare rod portion (26) near the bolt head (11) at one end and a threaded portion (25) at the other end, the bare rod portion (26) comprising a smooth outer wall, the threaded portion (25) comprising an outer wall provided with an external thread (14); the expansion sleeve (2) comprising two half tubes that can be mated to each other, each of the half tubes comprising an upper portion and a lower portion, and the half tubes being engaged into one tube via a snap-fit structure;
a circular grip hole (32) is provided at a middle portion of an inner wall of the expansion sleeve (2); an inner diameter of the circular grip hole (32) matches an outer diameter of the bare rod portion (26);
**characterized in that**
the inner diameter of the circular grip hole (32) is slightly larger than or equal to the outer diameter of the bare rod portion (26) and smaller than an outer diameter of the threaded portion (25); the outer diameter of the threaded portion (25) is larger than that of the bare rod portion (26); one side of the circular grip hole (32) is provided with an internal thread (22) that matches the threaded portion (25); when the expansion bolt kit is assembled, the threaded portion (25) of the bolt (1) is located at the side of the circular grip hole (32) comprising the internal thread (22); and the internal thread (22) extends from the middle portion to the end or close to the end of the expansion sleeve (2).

2. The expansion bolt kit of claim 1, **characterized in that** the half tubes of the expansion sleeve (2) have the same structure; the snap-fit structure is provided at both side edges of the half tubes; the snap-fit structure comprises a snap-fit fastener that comprises an insertion hole (7) and a matching cog (6); two pairs of snap-fit fasteners are disposed at an end of the expansion sleeve (2); the insertion hole (7) and the matching cog (6) are disposed in correspondence at the two edge sides of each half tube respectively; the matching cog (6) is provided with a rib; the rib is embedded and gripped in the insertion hole (7) following an insertion of the matching cog (6) into the insertion hole (7); the matching cog (6) at the upper portion of the half tube is embedded into the insertion hole (7) at the lower portion of the half tube, and the matching cog (6) at the lower portion of the half tube is embedded into the insertion hole (7) at the upper portion of the half tube.

3. The expansion bolt kit of claim 1, **characterized in that** the two half tubes are hinged to each other at one side via a connection rib (8) and comprise a snap-fit structure at the other side; the snap-fit fastener comprises an insertion hole (7) and a matching cog (6); one pair of snap-fit fasteners is disposed; the insertion hole (7) and the matching cog (6) are disposed at the two side edges of the upper and lower portions at the side opposite to the connection rib (8) respectively; the snap-fit fastener is disposed at one end of the expansion sleeve (2); the matching cog (6) is provided with a rib; the rib is embedded and gripped in the insertion hole (7) following an insertion of the matching cog (6) in the insertion hole (7); the matching cog (6) at the upper or lower portion of the half tube is inserted in the insertion hole (7) at the lower or upper portion of the half tube.

4. The expansion bolt kit of claim 1, **characterized in that** a conical hole (35) is provided at the end of the expansion sleeve (2) and is coaxial therewith along a central line thereof; a hole diameter of the conical hole (35) tapers along a direction in which the bolt (1) is screwed into the expansion sleeve (2); longitudinal cutouts (21) are distributed evenly around the conical hole (35); the internal thread (22) extends from the middle portion of the expansion sleeve (2) onto a wall of the conical hole (35), and matches the external thread (14) of the threaded portion (25).

5. The expansion bolt kit of claim 4, **characterized in that** a through hole (33) is provided at the end of the expansion sleeve (2) and is coaxial therewith along the central line; the through hole (33) is positioned at the end of the conical hole (35); the diameter of the through hole (33) is smaller than the diameter at the end of the conical hole (35); a circular hole (31) is provided at the front end of the expansion sleeve (2) and is coaxial therewith along the central line; the inner diameter of the circular hole (31) matches the outer diameter of the bare rod portion (26); the inner diameter of the circular hole (31) is slightly larger than or equal to the outer diameter of the bare rod portion (26); the snap-fit fastener is positioned between the circular grip hole (32) and the circular hole (31).

6. The expansion bolt kit of claim 5, **characterized in that** two to four longitudinal cutouts (21) are disposed; a length of the longitudinal cutouts (21) is equal to that of the expansion portion (24); an external thread (23) is evenly distributed over an outer wall of the expansion portion (24) of the expansion sleeve (2); a locating ring (9) is provided at a front end of the expansion portion (24) around an outer surface of the expansion sleeve (2); the expansion portion (24) is located at one side of the locating ring (9); an outer diameter of the locating ring (9) is larger than that of the expansion portion (24).

7. The expansion bolt kit of claim 6, **characterized in that** a diameter of the bare rod portion (26) is smaller than that of the threaded portion (25); the bolt head (11) is provided with a cross/single slot (12), a cross slot, a single slot, and a torx slot; anti-slip dots (13) are provided evenly around an inner side of the bolt head (11); an annular locating washer (3) is arranged around the bare rod portion (26); the locating washer (3), the threaded portion (25), and the bare rod portion (26) are longitudinally coaxial at a center; an outer diameter of the locating washer (3) is larger than an inner diameter of the circular hole (31); a length from the locating washer (3) to the end of the bolt portion is smaller than a length of the expansion sleeve (2); the bolt (1) is screwed into the expansion portion (24); the locating washer (3) adapts to prevent the bolt (1) from being screwed excessively beyond the expansion portion (24).

8. The expansion bolt kit of claim 7, **characterized in that** a link or connection rib (8) is provided at two adjacent side edges of the upper and lower portions to connect the upper and lower portions into an integral structure; the outer diameter of the expansion portion (24) at one side of the locating ring (9) is larger than that of the portion of the expansion sleeve (2) at the other side of the locating ring (9); stiffening ribs (34) are provided longitudinally over the wall of the expansion sleeve (2) at the other side of the locating ring (9) and are distributed evenly around the wall; the expansion bolt kit further comprises a bushing (10) of a cylindrical shape disposed over an outer surface of the expansion bolt kit; the bushing (10) wraps tightly around the portion of the expansion sleeve (2) at the other side of the locating ring (9).

9. A method for installing the expansion bolt kit of any one of claims 1-8, the method comprising:
providing a first board (41) and drilling a first hole in the first board (41);
directly inserting the expansion portion (24) of the expansion bolt kit into the first hole;
screwing the bolt (1) manually or using a bolt driver (43), when the bolt (1) is pushed into the expansion sleeve (2), the bolt (1) squeezes the longitudinal cutouts (21) of the expansion portion (24) to spread, such that the expansion sleeve (2) is expanded radially to fix and lock the expansion bolt kit;
drilling a second hole in a second board (42) and installing an eccentric fitting (44) in the second hole; and
drilling a third hole in the second board (42), inserting the rod through the third hole of the second board (42) to connect to the eccentric fitting (44); then tightening the eccentric fitting (44), to achieve seamless locking and fixing of the first and second boards.

## Patentansprüche

1. Dehnungsschraubensatz, umfassend eine Schraube (1) und eine Dehnungshülse (2), in welche die Schraube (1) eingehüllt ist, wobei ein Ende der Dehnungshülse (2) einen Dehnungsabschnitt (24) aufweist, der Dehnungsabschnitt (24) eine Vielzahl von longitudinalen Ausschnitten (21) aufweist, die gleichmäßig um den Dehnungsabschnitt (24) verteilt sind, und ausgelegt ist, um den Dehnungsabschnitt (24) in Dehnungsteile zu unterteilen, die sich nach außen dehnen können; die Schraube (1) eine Stange und einen Schraubkopf (11) an einem Ende und einen Gewindeabschnitt (25) an dem anderen Ende aufweist, der bloße Stangenabschnitt (26) eine glatte Außenwand aufweist, der Gewindeabschnitt (25) eine mit einem externen Gewinde (14) versehene Außenwand aufweist; die Dehnungshülse (2) zwei halbe Rohre aufweist, die miteinander verbunden werden können, wobei jedes der halben Rohre einen oberen Abschnitt und einen unteren Abschnitt aufweist und die halben Rohre mittels einer Einraststruktur in ein Rohr eingesetzt werden;
ein kreisförmiges Griffloch (32) ist an einem mittleren Abschnitt einer Innenwand der Dehnungshülse (2) vorgesehen; ein Innendurchmesser des kreisförmigen Grifflochs (32) passt mit einem Außendurchmesser des bloßen Stangenabschnitts (26) zusammen;
**dadurch gekennzeichnet, dass:**
der Innendurchmesser des kreisförmigen Grifflochs (32) leicht größer als oder gleich dem Außendurchmesser des bloßen Stangenabschnitts (26) und kleiner als ein Außendurchmesser des Gewindeabschnitts (25) ist; der Außendurchmesser des Gewindeabschnitts (25) größer als der des bloßen Stangenabschnitts (26) ist; eine Seite des kreisförmigen Grifflochs (32) mit einem Innengewinde (22) versehen ist, das mit dem Gewindeabschnitt (25) zusammenpasst; wenn der Dehnungsschraubensatz zusammengebaut ist, der Gewindeabschnitt (25) der Schraube (1) an der Seite des das Innengewinde (22) aufweisenden kreisförmigen Grifflochs (32) angeordnet ist; und das Innengewinde (22) sich von dem mittleren Abschnitt zu dem Ende oder fast bis zum Ende der Dehnungshülse (2) erstreckt.

2. Dehnungsschraubensatz nach Anspruch 1, **dadurch gekennzeichnet, dass** die halben Rohre der Dehnungshülse (2) die gleiche Struktur aufweisen; die Einraststruktur an beiden Seitenrändern der halben Rohre vorgesehen ist, die Einraststruktur eine Einrasthalterung aufweist, die ein Einsteckloch (7) und eine passende Kopplung (6) aufweist; zwei Paare Einrasthalterungen an einem Ende der Dehnungshülse (2) angeordnet sind; das Einsteckloch (7) und die passende Kopplung (6) übereinstimmend jeweils an den zwei Randseiten jedes halben Rohrs angeordnet sind; die passende Kopplung (6) mit einer Zarge versehen ist; nach dem Einstecken der passenden Kopplung (6) in das Einsteckloch (7) die Zarge in das Einsteckloch (7) eingebettet und ergriffen ist; die passende Kopplung (6) an dem oberen Abschnitt des halben Rohrs an dem unteren Abschnitt des halben Rohrs eingebettet ist und die passende Kopplung (6) an dem unteren Abschnitt des halben Rohrs in das Einsteckloch (7) an dem oberen Abschnitt des halben Rohrs eingebettet ist.

3. Dehnungsschraubensatz nach Anspruch 1, **dadurch gekennzeichnet, dass** die zwei halben Rohre an einer Seite über eine Verbindungsrippe (8) miteinander angelenkt sind und an der anderen Seite eine Einraststruktur aufweisen; die Einrasthalterung ein Einsteckloch (7) und eine passende Kopplung (6) aufweist; ein Paar Einrasthalterungen angeordnet ist; das Einsteckloch (7) und die passende Kopplung (6) an den zwei Seitenrändern des oberen und des unteren Abschnitts jeweils an den der Verbindungsrippe (8) gegenüberliegenden Seiten angeordnet sind; die Einrasthalterung an einem Ende der Dehnungshülse (2) angeordnet ist; die passende Kopplung (6) mit einer Rippe versehen ist; die Rippe nach dem Einsetzen der passenden Kopplung (6) in das Einsteckloch (7) in dem Einsteckloch (7) eingebettet und ergriffen ist; die passende Kopplung (6) an dem oberen oder dem unteren Abschnitt des halben Rohrs in das Einsteckloch (7) an dem unteren oder dem oberen Abschnitt des halben Rohrs eingesetzt ist.

4. Dehnungsschraubensatz nach Anspruch 1, **dadurch gekennzeichnet, dass** ein konisches Loch (35) an dem Ende der Dehnungshülse (2) vorgesehen und koaxial damit entlang einer Mittenlinie dieser ist; ein Lochdurchmesser des konischen Lochs (35) sich entlang einer Richtung verjüngt, in welcher die Schraube (1) in die Dehnungshülse (2) geschraubt wird; longitudinale Ausschnitte (21) gleichmäßig um das konische Loch (35) herum verteilt sind; das Innengewinde (22) sich von dem mittleren Abschnitt der Dehnungshülse (2) auf eine Wand des konischen Lochs (35) erstreckt und mit dem Außengewinde (14) des Gewindeabschnitts (25) zusammenpasst.

5. Dehnungsschraubensatz nach Anspruch 4, **dadurch gekennzeichnet, dass** ein Durchgangsloch (33) an dem Ende der Dehnungshülse (2) vorgesehen und koaxial damit entlang der Mittenlinie ist; das Durchgangsloch (33) an dem Ende des konischen Lochs (35) positioniert ist; der Durchmesser des Durchgangslochs (33) kleiner ist als der Durchmesser an dem Ende des konischen Lochs (35); ein kreisförmiges Loch (31) an dem vorderen Ende der Dehnungshülse (2) vorgesehen und koaxial damit entlang der Mittenlinie ist; der Innendurchmesser des kreisförmigen Lochs (31) mit dem Außendurchmesser des bloßen Stangenabschnitts (26) zusammenpasst; der Innendurchmesser des kreisförmigen Lochs (31) leicht größer oder gleich dem Außendurchmesser des bloßen Stangenabschnitts (26) ist; die Einrasthalterung zwischen dem kreisförmigen Griffloch (32) und dem kreisförmigen Loch (31) positioniert ist.

6. Dehnungsschraubensatz nach Anspruch 5, **dadurch gekennzeichnet, dass** zwei oder vier longitudinale Ausschnitte (21) angeordnet sind; eine Länge der longitudinalen Ausschnitte (21) gleich der des Dehnungsabschnitts (24) ist; ein Außengewinde (23) gleichmäßig über eine Außenwand des Dehnungsabschnitts (24) der Dehnungshülse (2) verteilt ist; ein Feststellungsring (9) an einem vorderen Ende des Dehnungsabschnitts (24) um eine Außenfläche der Dehnungshülse (2) vorgesehen ist; der Dehnungsabschnitt (24) an einer Seite des Feststellungsrings (9) angeordnet ist; ein Außendurchmesser des Feststellungsrings (9) größer ist als der des Dehnungsabschnitts (24).

7. Dehnungsschraubensatz nach Anspruch 6, **dadurch gekennzeichnet, dass** ein Durchmesser des bloßen Stangenabschnitts (26) kleiner ist als der des Gewindeabschnitts (25); der Schraubenkopf (11) mit einem Kreuz-/Einzelschlitz (12), einen Kreuzschlitz, einen Einzelschlitz und einem Torx-Schlitz versehen ist; Anti-Rutschpunkte (13) gleichmäßig um eine Innenseite des Schraubenkopfes (11) vorgesehen sind; eine ringförmige Feststellscheibe (3) um den bloßen Stangenabschnitt (26) angeordnet ist; die Feststellscheibe (3), der Gewindeabschnitt (25) und der bloße Stangenabschnitt (26) longitudinal an einer Mitte koaxial sind; ein Außendurchmesser der Feststellscheibe (3) größer ist als ein Innendurchmesser des kreisförmigen Lochs (31); eine Länge von der Feststellscheibe (3) zu dem Ende des Schraubenabschnitts kleiner ist als eine Länge der Dehnungshülse (2); die Schraube (1) in den Dehnungsabschnitt (24) geschraubt ist; die Feststellscheibe (3) ausgelegt ist, um zu verhindern, dass die Schraube (1) zu sehr über den Dehnungsabschnitt (24) hinaus eingeschraubt wird.

8. Dehnungsschraubensatz nach Anspruch 7, **dadurch gekennzeichnet, dass** eine Kopplungs- oder Verbindungsrippe (8) an zwei benachbarten Seitenrändern des oberen und des unteren Abschnitts vorgesehen ist, um den oberen und den unteren Abschnitt in eine integrale Struktur zu verbinden; der Außendurchmesser des Dehnungsabschnitts (24) an einer Seite des Feststellrings (9) größer ist als der des Abschnitts der Dehnungshülse (2) an der anderen Seite des Feststellrings (9); Versteifungsrippen (34) longitudinal über die Wand der Dehnungshülse (2) an der anderen Seite des Feststellrings (9) vorgesehen sind und gleichmäßig um die Wand herum verteilt sind; der Dehnungsschraubensatz ferner eine Buchse (10) mit einer zylindrischen Form aufweist, die über eine Außenoberfläche des Dehnungsschraubensatzes angeordnet ist; die Buchse (10) sich eng um den Abschnitt der Dehnungshülse (2) an der anderen Seite des Feststellrings (9) legt.

9. Verfahren zum Montieren des Dehnungsschraubensatzes nach einem der Ansprüche 1-8, wobei das Verfahren umfasst:
Bereitstellen eines ersten Bretts (41) und Bohren eines ersten Lochs in das erste Brett (41);
direktes Einsetzen des Dehnungsabschnitts (24) des Dehnungsschraubensatzes in das erste Loch;
manuelles Aufschrauben der Schraube (1) oder unter Verwendung eines Schraubendrehers (43), wobei, wenn die Schraube (1) in die Dehnungshülse (2) gedrückt wird, die Schraube (1) die longitudinalen Ausschnitte (21) des Dehnungsabschnitts (24) zum Ausbreiten derart zusammendrückt, dass die Dehnungshülse (2) sich radial erweitert, um den Dehnungsschraubensatz zu fixieren und blockieren;
Bohren eines zweiten Lochs in ein zweites Brett (42) und Montieren eines Exzenter-Beschlags (44) in dem zweiten Loch; und
Bohren eines dritten Lochs in das zweite Brett (42), Einsetzen der Stange durch das dritte Loch des zweiten Bretts (42) zum Verbinden mit dem Exzenter-Beschlag (44); dann Festziehen des Exzenter-Beschlags (44), um ein fugenloses Blockieren und Fixieren des ersten und des zweiten Bretts zu erreichen.

## Revendications

1. Kit de boulon à expansion, comprenant un boulon (1) et un manchon à expansion (2), dans lequel le boulon (1) est chemisé, une extrémité du manchon à expansion (2) comprenant une partie d'expansion (24), la partie d'expansion (24) comprenant une pluralité de découpes longitudinales (21) réparties de façon régulière autour de la partie d'expansion (24) et adaptées pour diviser la partie d'expansion (24) en des pièces d'expansion capables d'être expansées vers l'extérieur ; le boulon (1) comprenant une tige et une tête de boulon (11), la tige comprenant une partie de tige dénudée (26) proche de la tête de boulon (11) à une extrémité et une partie filetée (25) à l'autre extrémité, la partie de tige dénudée (26) comprenant une paroi extérieure lisse, la partie filetée (25) comprenant une paroi extérieure pourvue d'un filetage externe (14) ; le manchon à expansion (2) comprenant deux moitiés de tube aptes à être accouplées entre elles, chacune des moitiés de tube comprenant une partie supérieure et une partie inférieure, et les moitiés de tube étant engagées en un tube par une structure à encliquetage ;
un trou de saisie circulaire (32) est prévu au niveau d'une partie centrale d'une paroi intérieure du manchon à expansion (2) ; un diamètre intérieur du trou de saisie circulaire (32) correspond à un diamètre extérieur de la partie de tige dénudée (26) ;
**caractérisé en ce que**
le diamètre intérieur du trou de saisie circulaire (32) est légèrement supérieur ou égal au diamètre extérieur de la partie de tige dénudée (26) et inférieur à un diamètre extérieur de la partie filetée (25) ; le diamètre extérieur de la partie filetée (25) est supérieur à celui de la partie de tige dénudée (26) ; un côté du trou de saisie circulaire (32) est pourvu d'un filetage interne (22) correspondant à la partie filetée (25) ; lorsque le kit de boulon à expansion est assemblé, la partie filetée (25) du boulon (1) se trouve sur le côté du trou de saisie circulaire (32) comprenant le filetage interne (22) ; et le filetage interne (22) s'étend à partir de la partie centrale jusqu'à l'extrémité ou presque jusqu'à l'extrémité du manchon à expansion (2).

2. Kit de boulon à expansion selon la revendication 1, **caractérisé en ce que** les moitiés de tube du manchon à expansion (2) présentent la même structure ; la structure à encliquetage est disposée sur les deux bords latéraux des moitiés de tube ; la structure à encliquetage comprend un moyen de fixation à encliquetage comprenant un trou d'insertion (7) et un pignon correspondant (6) ; deux paires de moyens de fixation à encliquetage sont disposées à une extrémité du manchon à expansion (2) ; le trou d'insertion (7) et le pignon correspondant (6) sont disposés en correspondance sur les deux côtés de bord de chaque moitié de tube respectivement ; le pignon correspondant (6) est pourvu d'une nervure ; la nervure est intégrée et saisie dans le trou d'insertion (7) après une insertion du pignon correspondant (6) dans le trou d'insertion (7) ; le pignon correspondant (6) au niveau de la partie supérieure de la moitié de tube est intégré dans le trou d'insertion (7) au niveau de la partie inférieure de la moitié de tube, et le pignon correspondant (6) au niveau de la partie inférieure de la moitié de tube est intégré dans le trou d'insertion (7) au niveau de la partie supérieure de la moitié de tube.

3. Kit de boulon à expansion selon la revendication 1, **caractérisé en ce que** les deux moitiés de tube sont articulées l'une à l'autre sur un côté par une nervure de connexion (8) et comprennent une structure à encliquetage sur l'autre côté ; le moyen de fixation à encliquetage comprend un trou d'insertion (7) et un pignon correspondant (6) ; il est prévu une paire de moyens de fixation à encliquetage ; le trou d'insertion (7) et le pignon correspondant (6) sont disposés sur les deux bords latéraux des parties supérieure et inférieure sur le côté opposé à la nervure de connexion (8) respectivement ; le moyen de fixation à encliquetage est disposé à une extrémité du manchon à expansion (2) ; le pignon correspondant (6) est pourvu d'une nervure ; la nervure est intégrée et saisie dans le trou d'insertion (7) après une insertion du pignon correspondant (6) dans le trou d'insertion (7) ; le pignon correspondant (6) au niveau de la partie supérieure ou inférieure de la moitié de tube est inséré dans le trou d'insertion (7) au niveau de la partie inférieure ou supérieure de la moitié de tube.

4. Kit de boulon à expansion selon la revendication 1, **caractérisé en ce qu'un** trou conique (35) est prévu à l'extrémité du manchon à expansion (2) et coaxial avec celui-ci le long d'une ligne centrale de celui-ci ; un diamètre de trou du trou conique (35) se rétrécit le long d'une direction dans laquelle le boulon (1) est vissé dans le manchon à expansion (2) ; des découpes longitudinales (21) sont réparties de façon régulière autour du trou conique (35) ; le filetage interne (22) s'étend à partir de la partie centrale du manchon à expansion (2) vers une paroi du trou conique (35), et correspond au filetage externe (14) de la partie filetée (25).

5. Kit de boulon à expansion selon la revendication 4, **caractérisé en ce qu'un** trou de passage (33) est pourvu à une extrémité du manchon à expansion (2) et coaxial avec celui-ci le long d'une ligne médiane ; le trou de passage (33) est positionné à l'extrémité du trou conique (35) ; le diamètre du trou de passage (33) est inférieur au diamètre à l'extrémité du trou conique (35) ; un trou circulaire (31) est prévu à l'extrémité avant du manchon à expansion (2) et coaxial avec celui-ci le long de la ligne centrale ; le diamètre intérieur du trou circulaire (31) correspond au diamètre extérieur de la partie de tige dénudée (26) ; le diamètre intérieur du trou circulaire (31) est légèrement supérieur ou égal au diamètre extérieur de la partie de tige dénudée (26) ; le moyen de fixation à encliquetage est positionné entre le trou de saisie circulaire (32) et le trou circulaire (31).

6. Kit de boulon à expansion selon la revendication 5, **caractérisé en ce qu'il** est prévu deux à quatre découpes longitudinales (21) ; une longueur de la découpe longitudinale (21) est égale à celle de la partie d'expansion (24) ; un filetage externe (23) est réparti de façon régulière sur une paroi extérieure de la partie d'expansion (24) du manchon à expansion (2) ; un anneau de positionnement (9) est prévu à une extrémité avant de la partie d'expansion (24) autour d'une surface extérieure du manchon à expansion (2) ; la partie d'expansion (24) se trouve sur un côté de l'anneau de positionnement (9) ; un diamètre extérieur de l'anneau de positionnement (9) est supérieur à celui de la partie d'expansion (24).

7. Kit de boulon à expansion selon la revendication 6, **caractérisé en ce qu'un** diamètre de la partie de tige dénudée (26) est inférieur à celui de la partie filetée (25) ; la tête de boulon (11) est pourvue d'une fente cruciforme/unique (12), d'une fente cruciforme, d'une fente unique, et d'une fente torx ; des points antidérapants (13) sont disposés de façon régulière autour d'un côté intérieur de la tête de boulon (11) ; une rondelle de positionnement annulaire (3) est disposée autour de la partie de tige dénudée (26) ; la rondelle de positionnement (3), la partie filetée (25) et la partie de tige dénudée (26) sont coaxiales longitudinalement au niveau d'un centre ; un diamètre extérieur de la rondelle de positionnement (3) est supérieur à un diamètre intérieur du trou circulaire (31) ; une longueur allant de la rondelle de positionnement (3) à l'extrémité de la partie de boulon est inférieure à une longueur du manchon à expansion (2) ; le boulon (1) est vissé dans la partie d'expansion (24) ; la rondelle de positionnement (3) s'adapte pour empêcher le boulon (1) d'être vissé excessivement au-delà de la partie d'expansion (24).

8. Kit de boulon à expansion selon la revendication 7, **caractérisé en ce qu'une** liaison ou une nervure de connexion (8) est disposée sur deux bords latéraux adjacents des parties supérieure et inférieure pour relier les parties supérieure et inférieure dans une structure intégrale ; le diamètre extérieur de la partie d'expansion (24) sur un côté de l'anneau de positionnement (9) est supérieur à celui de la partie du manchon à expansion (2) sur l'autre côté de l'anneau de positionnement (9) ; des nervures de renforcement (34) sont disposées longitudinalement sur la paroi du manchon à expansion (2) sur l'autre côté de l'anneau de positionnement (9) et sont réparties de façon régulière autour de la paroi ; le kit de boulon à expansion comprend en outre une douille (10) de forme cylindrique disposée sur une surface extérieure du kit de boulon à expansion ; la douille (10) s'applique étroitement autour de la partie du manchon à expansion (2) sur l'autre côté de l'anneau de positionnement (9).

9. Procédé pour l'installation du kit de boulon à expansion selon l'une quelconque des revendications 1 à 8, le procédé comprenant :
la mise à disposition d'un premier panneau (41) et le perçage d'un premier trou dans le premier panneau (41) ;
l'insertion directe de la partie d'expansion (24) du kit de boulon à expansion dans le premier trou ;
le vissage du boulon (1) manuellement ou à l'aide d'un perforateur (43), lorsque le boulon (1) est poussé dans le manchon à expansion (2), le boulon (1) presse les découpes longitudinales (21) de la partie d'expansion (24) de manière à les écarter, de telle façon que le manchon à expansion (2) est expansé radialement pour fixer et bloquer le kit de boulon à expansion ;
le perçage d'un deuxième trou dans un deuxième panneau (42) et l'installation d'une fixation excentrique (44) dans le deuxième trou ; et
le perçage d'un troisième trou dans le deuxième panneau (42), l'insertion de la tige à travers le troisième trou du deuxième panneau (42) pour connecter celle-ci à la fixation excentrique (44) ; puis le serrage de la fixation excentrique (44) pour obtenir un blocage sans soudure et une fixation des premier et deuxième panneaux.
